# FASCICULE DE BREVET EUROPEEN

(11) **EP 1 584 237 B1**
(45) Date de publication et mention de la délivrance du brevet: **05.12.2007**
(21) Numéro de dépôt: 04290952.3
(22) Date de dépôt: 09.04.2004
(51) Int. Cl.: A21C 15/00, A23G 9/28

(54) **Procédé pour préparer avant remplissage un cornet en gaufrette, cornet ainsi obtenu et installation pour la mise en oeuvre du procédé**
Verfahren zur Herstellung einer Waffeltüte vor dem Befüllen derselben, derart hergestellte Tüte und Anlage zur Durchführung des Verfahrens
Process for preparing a wafer cone before filling, cone thus obtained and plant for carrying out the process.

(43) Date de publication de la demande: 12.10.2005
(73) Titulaire: Nestec S.A., 1800 Vevey (CH)
(72) Inventeur: Daouse, Alain, 60430 Noailles (FR); Mange, Christian Jean Marie, Dublin - OH 43017 (IE)
(74) Mandataire: Elleby, Gudrun

(56) Documents cités:
- EP-A- 0 350 352
- EP-A- 0 733 308
- EP-A- 0 784 934
- FR-A- 1 547 899
- GB-A- 457 162
- US-A- 2 670 696
- US-A- 3 171 367
- US-A- 4 505 220
- US-A- 6 006 535

## Description

L'invention concerne un traitement que l'on applique sur des cornets en gaufrette destinés à conditionner un produit alimentaire, la gaufrette étant consommée par l'utilisateur en même temps que le produit alimentaire qu'elle permet de conditionner. Plus particulièrement, l'invention concerne la réalisation de cornets destinés au conditionnement d'une crème glacée.

Lorsque l'on conditionne une crème glacée dans un cornet conique réalisé en gaufrette, il est impératif de protéger la gaufrette du contact avec la crème glacée sans quoi la gaufrette perd son caractère croustillant, ce qui est un handicap important sur le plan de la commercialisation. On a donc proposé, de façon connue, de réaliser, sur la paroi intérieure du cornet conique de gaufrette, une couche d'un agent de revêtement constitué par du chocolat, cette couche constituant une barrière entre la gaufrette et la crème glacée qui y est conditionnée. La réalisation de cette barrière d'étanchéité implique une contrainte, car il faut que la barrière soit totalement continue, sans quoi la moindre lacune dans le revêtement entraîne une perte du caractère croustillant de la gaufrette, au moins dans toute la zone qui entoure ladite lacune. On a donc pensé, pour éviter tout risque de défaut et assurer ainsi la qualité du produit commercialisé, à augmenter de façon significative la quantité de chocolat utilisée comme revêtement intérieur du cornet, ledit chocolat étant délivré dans le cornet à l'état liquide au moyen d'une tête d'arrosage, qui le projette dans la partie supérieure du cornet ; mais lorsque l'arrosage ainsi réalisé évite tout risque de lacune, il s'avère que la quantité de chocolat utilisée est très excédentaire par rapport à celle qui serait juste nécessaire pour la réalisation d'une couche uniforme continue sur la paroi intérieure du cône de gaufrette, de sorte que l'excédent coule vers le point bas du cône de gaufrette, c'est-à-dire vers la pointe du cône. Cette situation entraîne plusieurs inconvénients : en premier lieu, si la partie inférieure du cône est occupée par du chocolat, le consommateur qui achète un cône de crème glacée se retrouve avec un produit, qui contient une quantité de crème glacée inférieure à celle qu'il était en droit d'attendre en voyant la taille extérieure du cône puisque la partie inférieure du cône est occupée par du chocolat ; en second lieu, la quantité de chocolat utilisée pour la fabrication est nettement supérieure à celle qui est nécessaire au revêtement de la gaufrette, de sorte que le prix de revient du produit est augmenté de façon significative ; en troisième lieu, le chocolat qui a coulé dans la partie inférieure du cône forme une masse dont le refroidissement est plus lent que celui de la fine couche de revêtement, de sorte que le cycle de fabrication du produit final est rallongé puisque l'on ne peut pas mettre en place la crème glacée avant que le chocolat ne soit solidifié.

La présente invention a pour but de pallier les inconvénients précités d'une façon simple : pour éviter la perte du caractère croustillant de la gaufrette, on arrose la paroi intérieure de la gaufrette avec un agent de revêtement fluide, par exemple du chocolat, en quantité excédentaire par rapport à celle qui serait strictement nécessaire pour l'établissement d'une couche continue sur la paroi intérieure de la gaufrette, de sorte qu'un excédent d'agent de revêtement coule au fond du cône ; et dans une deuxième étape, on aspire au moyen d'une pipette l'excédent d'agent de revêtement et on récupère cet excédent pour le recycler en vue de l'arrosage d'un autre cornet de gaufrette. De la sorte, on élimine le coût dû à la mise en oeuvre d'un excédent d'agent de revêtement ; on élimine le mécontentement du consommateur puisque tout le volume intérieur du cornet ainsi préparé pourra être occupé par le produit alimentaire dont le client voulait faire l'achat, par exemple une crème glacée ; et on élimine l'allongement du cycle de fabrication puisque, dans le cornet, seul subsiste l'agent de revêtement mis en couche mince sur la gaufrette.

Le document EP-A-0 350 352 décrit un procédé selon le préambule de la revendication 1.

La présente invention a, en conséquence, pour objet un procédé pour la préparation d'un conteneur constitué d'une gaufrette, selon la revendication 1.

Dans un mode préféré de mise en oeuvre, on recycle l'excédent aspiré d'agent de revêtement vers l'alimentation de l'arrosage de l'intérieur d'un conteneur. Selon l'invention, on aspire l'agent de revêtement par une pipette, dont une extrémité a des dimensions suffisamment réduites pour pouvoir être positionnée à proximité du point bas du conteneur, ladite extrémité comportant au moins un orifice d'aspiration, et qu'après une aspiration, on alimente le (ou les) orifice(s) par un flux gazeux pour chasser les éventuelles particules de bouchage susceptibles de s'y trouver : en effet, il est fréquent que les gaufrettes, au cours de leur manipulation, génèrent des petites particules qui se retrouvent, après l'opération d'arrosage, en suspension dans l'excédent d'agent de revêtement en partie basse du cornet, ces particules étant aspirées en même temps que ledit excédent et étant susceptibles de provoquer un bouchage des orifices d'aspiration de la pipette ; la réalisation d'un soufflage par un flux gazeux permet d'éjecter les particules et d'éviter ainsi tout bouchage des pipettes d'aspiration. On peut réaliser le soufflage de 1' (ou des) orifice(s) d'aspiration par un flux gazeux qui éjecte les particules dans le même sens que le sens de passage du flux d'agent de revêtement recyclé. On peut disposer le (ou les) orifice(s) d'aspiration au voisinage de la base d'une pipette, qui coulisse dans un guide apte à racler la paroi externe de ladite pipette pour faire redescendre par gravité dans le conteneur les particules de gaufrette accolées à ladite paroi externe. On peut aussi réaliser le (ou les) orifice(s) d'aspiration en les disposant latéralement sur la pipette, et on prévoit que le guide comporte une chambre de soufflage du flux gazeux pour chasser les particules de gaufrette coincées dans le (ou les) orifice(s).

Dans une application préférée du procédé selon l'invention, on utilise comme conteneur un cornet sensiblement conique ; l'agent de revêtement peut être du chocolat ; dans une application particulièrement avantageuse, le produit alimentaire est un produit à forte viscosité, notamment une crème glacée.

La présente invention a enfin pour objet une installation pour la mise en oeuvre du procédé tel que ci-dessus défini, selon la revendication 9.

On peut prévoir que , dans un mode préféré de réalisation, la position haute de chaque pipette du poste d'aspiration amène l' (ou les) orifice(s) d'aspiration dans une chambre, où un flux gazeux souffle le (ou les) orifice(s) et que chaque pipette comporte un canal intérieur par où l'excédent d'agent de revêtement est transporté vers un réservoir sous pression réduite, le flux gazeux qui souffle le (ou les) orifice(s) provenant d'une entrée d'air prévue dans chaque chambre, cet air de soufflage étant envoyé vers le réservoir de même que l'agent de revêtement aspiré ; le réservoir peut être équipé d'une régulation de la pression d'air qui y règne ; le réservoir peut alimenter une pompe, qui fournit l'agent de revêtement au poste d'arrosage à une pression supérieure à la pression atmosphérique.

Selon une réalisation avantageuse, l'installation selon l'invention met en oeuvre un agent de revêtement, qui est fluide à chaud et se solidifie par simple refroidissement à la température ambiante ; entre, d'une part, la pompe, qui fournit l'agent de revêtement au poste d'arrosage et, d'autre part, le poste d'arrosage lui-même, on peut prévoir que soit interposé un échangeur de chaleur, qui assure le maintien de l'agent de revêtement à une température suffisante pour que la fluidité dudit agent permette un fonctionnement correct des postes d'arrosage et d'aspiration ainsi qu'une circulation sans bouchage de l'agent de revêtement en amont et en aval du réservoir.

Selon un mode de réalisation préféré, au moins un filtre est interposé sur les canalisations de circulation de l'agent de revêtement de façon que les particules de gaufrette soufflées par le flux gazeux dans les orifices d'aspiration et dispersées dans l'agent de revêtement soient arrêtées et extraites de la circulation d'agent de revêtement ; avantageusement, l'installation comporte un filtre disposé sur la canalisation de circulation, qui relie l'échangeur de chaleur et le poste d'arrosage. On préfère utiliser, comme conteneur, un cornet sensiblement conique ; l'agent de revêtement est avantageusement du chocolat, notamment quand le produit conditionné dans le conteneur est une crème glacée.

Pour mieux faire comprendre l'objet de l'invention, on va en décrire maintenant, à titre d'exemple purement illustratif et non limitatif, un mode de réalisation représenté sur le dessin annexé.

Sur ce dessin :
- la figure 1 est un schéma général d'une installation permettant la mise en oeuvre du procédé selon l'invention ;
- la figure 2 est une vue schématique selon II-II de la figure 1 d'un convoyeur équipé d'un poste d'arrosage et d'un poste d'aspiration, ces deux postes étant en cours de fonctionnement et le convoyeur étant à l'arrêt ;
- la figure 3 représente une vue schématique analogue à la figure 2, dans laquelle les postes d'arrosage et d'aspiration ont été relevés en position haute, le convoyeur étant en mouvement dans le sens de la flèche F ;
- la figure 4 représente, en élévation, une pipette d'aspiration, la partie basse de cette pipette étant représentée en coupe axiale ;
- la figure 5 représente, en élévation, un guide de pipette comportant une chambre de soufflage ;
- la figure 6 représente une vue en plan du guide de la figure 5, selon VI-VI de la figure 5 ;
- la figure 7 représente une coupe du guide de la figure 5 selon VII-VII de la figure 6.

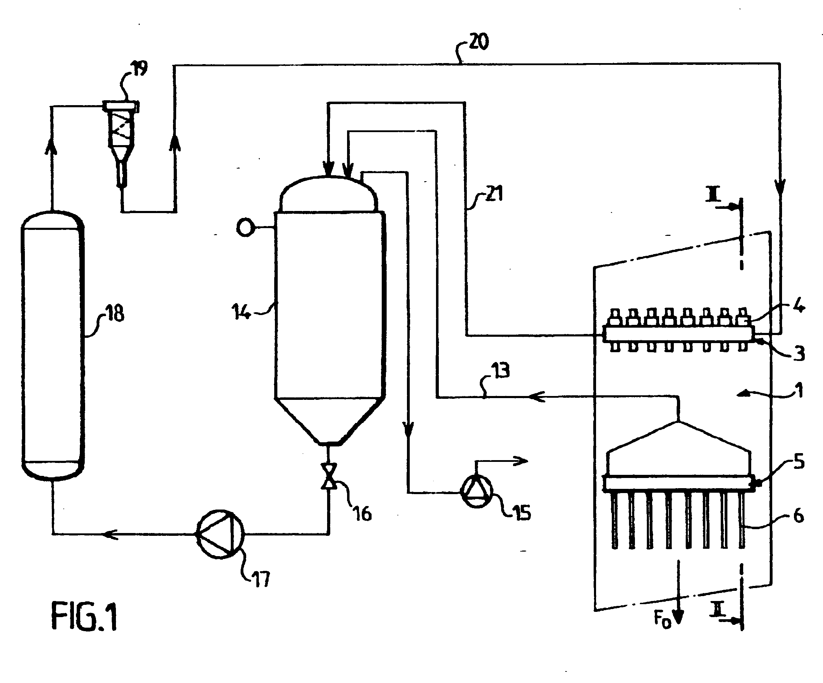

En se référant au dessin, on voit qu'une installation selon l'invention comporte un convoyeur horizontal désigné par 1 dans son ensemble, le convoyeur 1 étant constitué d'une pluralité d'éléments tous identiques reliés les uns aux autres, chaque élément ayant, vu en plan, une forme générale rectangulaire et comportant huit réceptacles 2 identiques, disposés côte à côte. Les réceptacles 2 ont une forme tronconique et sont alimentés par un distributeur automatique (non représenté) en gaufrettes coniques. Le grand axe des éléments rectangulaires du convoyeur est perpendiculaire à la direction de déplacement dudit convoyeur 1, cette direction correspondant à la flèche F₀ de la figure 1.

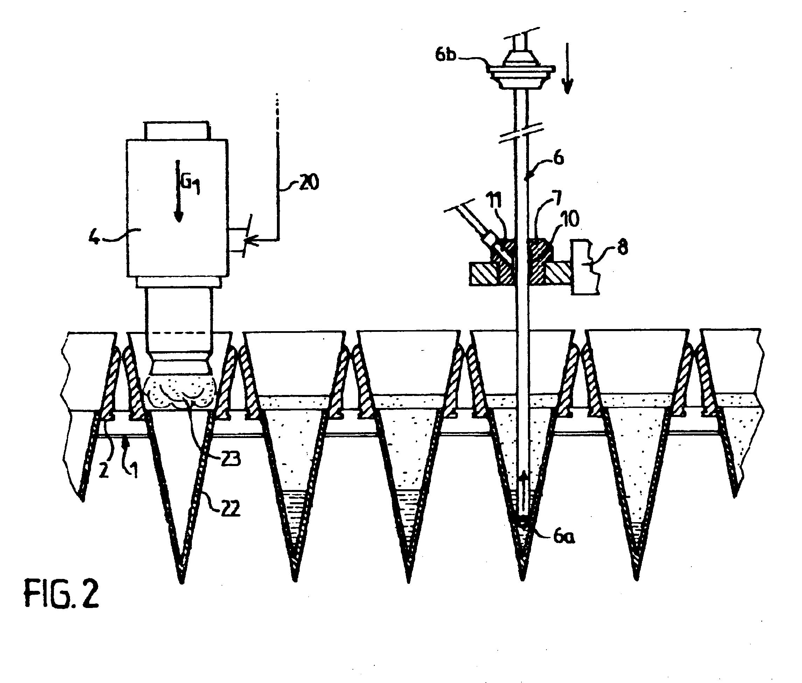

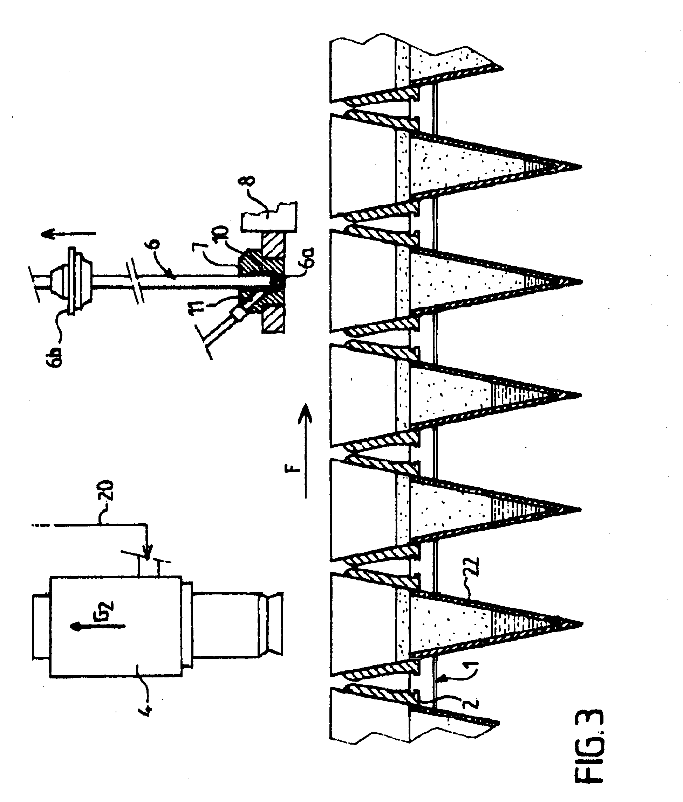

Le convoyeur 1 est associé à un poste d'arrosage, désigné par 3 dans son ensemble. Le poste d'arrosage comporte autant de têtes d'arrosage 4 qu'il y a de réceptacles 2 sur un même élément de convoyeur, chaque réceptacle 2 pouvant venir au droit d'une tête d'arrosage au cours du déplacement du convoyeur. Le convoyeur 1 a un déplacement discontinu par pas successifs, le pas du convoyeur correspondant au pas qui sépare deux éléments successifs dudit convoyeur. Les têtes d'arrosage 4 du poste d'arrosage 3 sont susceptibles de se déplacer verticalement par rapport au convoyeur, selon les flèches G₁ et G₂ des figures 2 et 3. Le support par rapport auquel les têtes d'arrosage 4 peuvent se déplacer en translation n'a pas été représenté sur le dessin dans un but de simplification, non plus que la commande de la translation de ces têtes d'arrosage.

A une distance de trois pas de déplacement du convoyeur, se trouve, en aval du poste d'arrosage 3, un poste d'aspiration 5 qui, dans son ensemble, est disposé au-dessus du convoyeur parallèlement au poste d'arrosage 3. Lorsque le convoyeur est à l'arrêt entre deux déplacements successifs, un élément du convoyeur présente au droit du poste d'aspiration 5 les huit réceptacles 2 qu'il comporte ; au droit de chaque réceptacle, le poste d'aspiration comporte une pipette d'aspiration 6, qui est constituée d'un tube vertical, dont l'extrémité inférieure 6a est conique et obturée et dont l'extrémité supérieure comporte une embase 6b solidaire d'un moyen d'entraînement en translation verticale, non représenté. Entre ces deux extrémités, la pipette d'aspiration 6 traverse un guide désigné par 7 dans son ensemble, le guide 7 étant solidaire d'un support 8 qui constitue un élément fixe du poste d'aspiration 5.

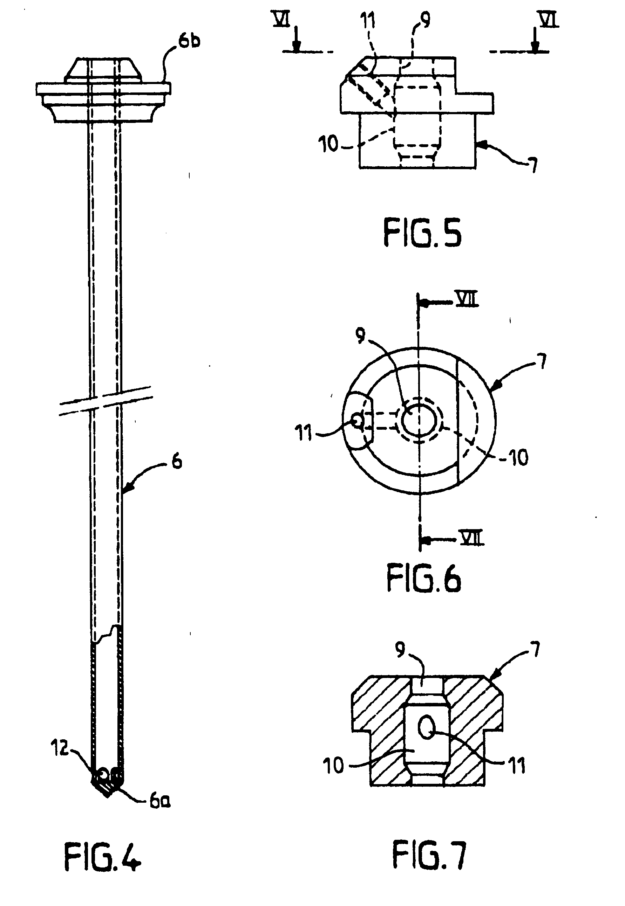

Le guide 7, représenté en détail sur les figures 5 à 7, est une pièce de forme générale approximativement cylindrique et il comporte, selon son axe, un alésage 9 dont la partie centrale s'élargit pour constituer une chambre 10. Le diamètre extérieur de la pipette 6 et le diamètre de l'alésage 9 sont égaux au jeu de coulissement près. Dans la chambre 10 débouche un canal d'entrée d'air 11 qui est relié à une alimentation en air comprimé à 4 bars. A la partie inférieure de la pipette 6, on a ménagé des orifices d'aspiration 12 disposés latéralement juste au-dessus de la partie conique, qui ferme l'extrémité inférieure 6a de la pipette 6. L'ensemble des pipettes d'aspiration 6 du poste d'aspiration 5 est relié à un collecteur et, de là, par une canalisation calorifugée 13, à un réservoir 14 qui est maintenu sous pression réduite grâce à une pompe 15.

La sortie du réservoir 14 s'effectue par l'intermédiaire d'une vanne 16 et est reprise par une pompe 17, qui alimente un échangeur de chaleur 18 dont la sortie s'effectue par l'intermédiaire d'un filtre 19. Le filtre 19 alimente par une canalisation 20 l'entrée des têtes d'arrosage 4, le surplus d'alimentation étant renvoyé par la canalisation 21 au réservoir 14. Les canalisations de liaison d'une part, entre le réservoir 14 et l'échangeur de chaleur 18 et, d'autre part, entre l'échangeur de chaleur 18 et le filtre 19, ainsi que les canalisations 20 et 21 sont calorifugées et comportent, comme la canalisation 13, une circulation de liquide chaud restreignant au minimum les déperditions calorifiques.

Chaque réceptacle 2 du convoyeur 1 reçoit par un distributeur automatique un cornet conique de gaufrette désigné par 22 sur le dessin. Le cornet 22 est présenté au droit d'une tête d'arrosage 4 et, lorsque le convoyeur est à l'arrêt entre deux pas successifs, la tête d'arrosage 4 descend selon la flèche G₁ de la figure 2 pour délivrer dans l'embouchure qui constitue la partie haute du cornet, du chocolat liquide chaud 23 qui est amené par la canalisation 20 ; le chocolat chaud est projeté sur la paroi intérieure du cornet en gaufrette 22 et cette projection est effectuée en quantité suffisante pour que l'on soit certain qu'il ne reste aucune lacune dans le recouvrement de ladite paroi intérieure par le chocolat. Pour que l'on soit certain de l'absence de telles lacunes, il faut que la quantité de chocolat projetée soit excédentaire : par exemple, on projettera 12 grammes de chocolat dans un cornet alors que la couche de revêtement, qui reste sur la paroi de la gaufrette, est d'environ 6 grammes ; les 6 grammes restants se rassemblent dans la partie basse du cornet, comme il est bien visible sur les figures 2 et 3 pour les cornets qui sont compris entre les postes d'arrosage et d'aspiration. Lorsque cette opération d'arrosage est terminée, la tête d'arrosage 4 remonte dans le sens inverse de la flèche G₁.

Pendant le même temps, au droit du poste d'aspiration, la pipette d'aspiration 6 est venue en position basse comme indiqué sur la figure 2, son extrémité inférieure conique 6a venant au fond du cône de gaufrette. Chaque pipette d'aspiration 6 étant connectée par la canalisation 13 au réservoir 14 qui est sous pression réduite, il se produit, par les orifices 12 ménagés en bas de chaque pipette, une aspiration du chocolat liquide placé en partie basse du cornet. Le chocolat aspiré est toujours liquide car le délai pour passer du poste d'arrosage 3 au poste d'aspiration 5 est d'environ 5 secondes, ce qui est insuffisant pour que le chocolat ait eu le temps de se solidifier. Quand cette aspiration a été effectuée, la pipette d'aspiration 6 est remontée en position haute par son embase 6b et elle coulisse vers le haut à travers le guide 7 jusqu'à ce que les orifices 12 se trouvent au niveau de la chambre 10. A ce moment, l'air comprimé, qui est amené par l'entrée d'air 11 traverse les orifices 12 et les débouche par soufflage si des particules de gaufrette ont été retenues dans lesdits orifices, ces particules ayant été transportées par le chocolat liquide au cours de son aspiration. Les guides 7 permettent également, étant donné que les orifices 12 sont disposés latéralement, de racler les pipettes 6 et de faire redescendre les grosses particules de gaufrettes cassées dans le fond des cônes, alors que le soufflage dans les guides permet de chasser les particules coincées dans l'épaisseur de la paroi qui délimite les orifices 12.

Lorsque les têtes d'arrosage 4 et les pipettes d'aspiration 6 sont revenues à leur position haute, elles sont passées au-dessus des cornets en gaufrette et des réceptacles 2, de sorte que le convoyeur 1 peut avancer d'un pas comme indiqué par la flèche F sur la figure 3. Après que l'aspiration de l'excédent de chocolat ait été effectuée, il reste très peu de chocolat liquide au fond du cornet, de sorte que le chocolat restant va rapidement se solidifier. On peut donc prévoir assez rapidement la mise en place dans le cornet ainsi préparé d'une crème glacée, cette crème glacée remplissant le cornet de gaufrette recouverte de chocolat. Compte tenu de la grande quantité de chocolat utilisée en arrosage, il n'y a aucune lacune de recouvrement sur la paroi intérieure de la gaufrette, donc aucun risque de disparition ou de réduction du caractère croustillant de la gaufrette lorsque le cornet est chargé de crème glacée.

Comme on l'a compris d'après la description qui précède, l'aspiration de l'excédent de chocolat est effectuée par action de la pression réduite qui règne dans le réservoir 14. L'éjection de chocolat par les têtes d'arrosage 4 est effectuée sous l'action de la pression de l'alimentation générée par la pompe 17 dans la canalisation 20. La pression réduite est maintenue dans le réservoir 14 par la pompe 15. Les particules de gaufrette éjectées des orifices 12 grâce à l'air comprimé envoyé par l'entrée d'air 11 sont renvoyées par la canalisation 13 dans le réservoir 14 puis filtrées dans le filtre 19 après que l'on ait réchauffé le chocolat par l'échangeur de chaleur 18. De la sorte, le chocolat chaud envoyé dans les têtes d'arrosage 4 est exempt de particules de gaufrette et l'excédent d'alimentation non utilisé par les têtes d'arrosage 4 est renvoyé au réservoir par la canalisation 21 pour assurer un maintien en température du chocolat.

## Revendications

1. Procédé pour la préparation d'un conteneur constitué d'une gaufrette (22), ladite préparation étant effectuée avant le remplissage dudit conteneur avec un produit alimentaire, la paroi dudit conteneur s'étendant entre une zone d'embouchure ouverte vers l'extérieur et une zone plus étroite formant une extrémité fermée vers l'extérieur, procédé dans lequel, pour préserver le caractère croustillant de la gaufrette, on dispose le conteneur de façon que l'extrémité étroite fermée de la gaufrette constitue le point bas du conteneur et on arrose la paroi intérieure du conteneur avec un agent de revêtement liquide, ledit agent de revêtement étant susceptible de se solidifier rapidement pour constituer une couche de revêtement destinée, après mise en place du produit alimentaire dans le conteneur, à séparer la gaufrette et le produit alimentaire, ladite couche de revêtement étant prévue pour être, ultérieurement, consommée en même temps que la gaufrette et ledit produit alimentaire, procédé dans lequel on arrose l'intérieur du conteneur avec une quantité excédentaire d'agent de revêtement suffisante pour assurer qu'aucune zone de lacune de revêtement ne subsiste sur la paroi intérieure de la gaufrette destinée à venir en contact avec le produit alimentaire, l'excédent d'agent de revêtement liquide se regroupant par gravité au point bas du conteneur, et qu'avant la solidification dudit excédent, on enlève l'excédent hors du conteneur, la solidification ultérieure de la couche de revêtement permettant ainsi d'établir une barrière continue sur la paroi intérieure de la gaufrette, **caractérisé par le fait que** l'on aspire l'agent de revêtement par une pipette (6), dont une extrémité (6a) a des dimensions suffisamment réduites pour pouvoir être positionnée à proximité du point bas du conteneur, ladite extrémité comportant au moins un orifice d'aspiration (12), et qu'après une aspiration, on alimente le (ou les) orifice(s) (12) par un flux gazeux pour chasser les éventuelles particules de bouchage susceptibles de s'y trouver.

2. Procédé selon la revendication 1, **caractérisé par le fait que** l'on recycle l'excédent aspiré d'agent de revêtement vers l'alimentation de l'arrosage de l'intérieur du conteneur.

3. Procédé selon la revendication 2, **caractérisé par le fait que** l'on réalise le soufflage de l' (ou des) orifice(s) d'aspiration (12) par un flux gazeux qui éjecte les particules dans le même sens que le sens de passage du flux d'agent de revêtement recyclé.

4. Procédé selon la revendication 3, **caractérisé par le fait qu**'on dispose le (ou les) orifice(s) d'aspiration (12) au voisinage de la base d'une pipette (6), qui coulisse dans un guide (7) apte à racler la paroi externe de ladite pipette (6) pour faire redescendre par gravité dans le conteneur les particules de gaufrette accolées à ladite paroi externe.

5. Procédé selon la revendication 4, **caractérisé par le fait qu**'on réalise le (ou les) orifice(s) d'aspiration (12) en les disposant latéralement sur la pipette (6), et qu'on prévoit que le guide (7) comporte une chambre de soufflage (10) du flux gazeux pour chasser les particules de gaufrette coincées dans le (ou les) orifice(s) (12).

6. Procédé selon l'une des revendications 1 à 5, **caractérisé par le fait que** le conteneur est un cornet sensiblement conique.

7. Procédé selon l'une des revendications 1 à 6, **caractérisé par le fait que** l'agent de revêtement est du chocolat.

8. Procédé selon l'une des revendications 1 à 7, **caractérisé par le fait que** le produit alimentaire est une crème glacée.

9. Installation pour la mise en oeuvre du procédé selon l'une des revendications 1 à 8 comprenant, en premier lieu, un convoyeur (1) à déplacement discontinu par pas successifs, ledit convoyeur (1) comportant des éléments sur chacun desquels est prévu au moins un réceptacle (2) destiné à recevoir un conteneur constitué par une gaufrette (22), la paroi dudit conteneur s'étendant entre une zone d'embouchure ouverte vers l'extérieur et une zone plus étroite formant une extrémité fermée vers l'extérieur, ledit conteneur étant disposé dans un réceptacle de façon que son extrémité fermée forme le point bas de la gaufrette, en deuxième lieu, un poste d'arrosage (3) sur lequel, au droit de chaque conteneur porté par un élément de convoyeur (1), qui vient en vis-à-vis du poste d'arrosage (3) à un temps d'arrêt dudit convoyeur, est disposée une tête d'arrosage (4) capable d'assurer une aspersion de la paroi intérieure de la gaufrette (22), ladite tête d'arrosage (4) pouvant se déplacer entre une position basse où, pour distribuer l'agent de revêtement, la tête (4) est positionnée dans ou au voisinage de l'embouchure du conteneur, et une position haute, qui permet le déplacement du convoyeur (1), **caractérisée par le fait qu**'elle comporte, en troisième lieu, un poste d'aspiration (5) sur lequel, au droit de chaque conteneur porté par un élément du convoyeur (1), qui vient en vis-à-vis du poste d'aspiration (5) à un temps d'arrêt du convoyeur (1), est disposée une pipette d'aspiration (6) comportant, à son extrémité basse (6a), au moins un orifice d'aspiration (12), la pipette d'aspiration (6) pouvant se déplacer entre une position basse, où son extrémité basse (6a) vient au voisinage du point bas de la gaufrette (22), et une position haute, qui permet le déplacement du convoyeur (1), ledit poste d'aspiration (5) se trouvant en aval du poste d'arrosage (3) dans le sens du déplacement du convoyeur (1), la position haute de chaque pipette (6) du poste d'aspiration (5) amenant le (ou les) orifice(s) d'aspiration (12) dans une chambre (10), où un flux gazeux souffle le (ou les) orifice(s) (12).

10. Installation selon la revendication 9, **caractérisée par le fait que** le (ou les) orifice(s) d'aspiration (12) sont ménagés latéralement au voisinage de la base des pipettes d'aspiration (6) et que le flux gazeux soufflé au niveau des chambres (10) chasse les particules de gaufrette coincées dans les orifices (12).

11. Installation selon l'une des revendications 9 à 10, **caractérisée par le fait que** le déplacement de chaque pipette d'aspiration (6) entre sa position basse et sa position haute s'effectue à travers un guide (7), qui racle la paroi externe de la pipette (6), qui lui est associée, pour faire redescendre par gravité dans le conteneur les particules de gaufrette accolées à ladite paroi externe.

12. Installation selon l'une des revendications 9 à 11, **caractérisée par le fait que** chaque pipette (6) comporte un canal intérieur par où l'excédent d'agent de revêtement est transporté vers un réservoir (14) sous pression réduite, le flux gazeux qui souffle le (ou les) orifice(s) (12) provenant d'une entrée d'air (11) prévue dans chaque chambre (10), cet air de soufflage étant envoyé vers le réservoir (14) de même que l'agent de revêtement aspiré.

13. Installation selon la revendication 12, **caractérisée par le fait que** le réservoir (14) est équipé d'une régulation de la pression d'air, qui y règne.

14. Installation selon l'une des revendications 12 ou 13, **caractérisée par le fait que** le réservoir (14) alimente une pompe (17), qui fournit l'agent de revêtement au poste d'arrosage (3) à une pression supérieure à la pression atmosphérique.

15. Installation selon l'une des revendications 11 à 14, **caractérisée par le fait qu**'elle met en oeuvre un agent de revêtement, qui est fluide à chaud et se solidifie par simple refroidissement à la température ambiante, et qu'entre, d'une part, la pompe (17), qui fournit l'agent de revêtement au poste d'arrosage (3) et, d'autre part, le poste d'arrosage (3) lui-même, est interposé un échangeur de chaleur (18), qui assure le maintien de l'agent de revêtement à une température suffisante pour que la fluidité dudit agent permette un fonctionnement correct des postes d'arrosage (3) et d'aspiration (5) ainsi qu'une circulation sans bouchage de l'agent de revêtement en amont et en aval du réservoir (14).

16. Installation selon la revendication 15, **caractérisée par le fait que** sur les canalisations (13, 20, 21) de circulation de l'agent de revêtement est interposé au moins un filtre (19).

17. Installation selon la revendication 16, **caractérisée par le fait qu**'elle comporte un filtre (19) disposé sur la canalisation de circulation, qui relie l'échangeur de chaleur (18) et le poste d'arrosage (3).

18. Installation selon l'une des revendications 9 à 17, **caractérisée par le fait que** le conteneur est un cornet sensiblement conique.

19. Installation selon l'une des revendications 9 à 18, **caractérisée par le fait que** l'agent de revêtement est du chocolat.

20. Installation selon l'une des revendications 9 à 19, **caractérisée par le fait que** le produit conditionné dans le conteneur est une crème glacée.

## Claims

1. Process for the preparation of a container composed of a wafer (22), the said preparation being implemented prior to filling of the said container with a food product, the wall of the said container extending between an open mouth zone outwards and a narrower zone forming a closed end outwards, in which process, in order to preserve the crunchy character of the wafer, the container is arranged so that the narrow closed end of the wafer constitutes the low point of the container and the inner wall of the container is sprayed with a liquid coating agent, the said coating being likely to solidify rapidly to constitute a coating layer intended, after placing the food product in the container, to separate the wafer and the food product, the said coating layer being designed to be subsequently consumed at the same time as the wafer and the said food product, in which process the inside of the container is sprayed with an excess quantity of coating agent sufficient to ensure that no gap zone in the coating remains on the inner wall of the wafer intended to come into contact with the food product, the excess liquid coating agent collecting by gravity at the low point of the container, and that prior to solidification of the said excess, the excess is removed outside the container, subsequent solidification of the coating layer thus allowing a continuous barrier to be formed on the inner wall of the wafer, **characterised by** the fact that the coating agent is removed by suction using a pipette (6), one end (6a) of which has sufficiently reduced dimensions to be able to be positioned near to the low point of the container, the said end comprising at least one suction orifice (12), and that after suction the orifice(s) (12) is/are fed by a gas stream to expel any particles that may be blocking the orifice (s).

2. Process according to claim 1, **characterised by** the fact that the excess coating agent removed by suction is recycled as feed for spraying the inside of the container.

3. Process according to claim 2, **characterised by** the fact that blowing of the suction orifice(s) (12) is carried out by a gas stream which ejects the particles in the same direction as the direction of passage of the stream of recycled coating agent.

4. Process according to claim 3, **characterised by** the fact that the suction orifice(s) (12) are arranged in the vicinity of the base of a pipette (6) which slides in a guide (7) capable of scraping the outer wall of the said pipette (6) to make the wafer particles attached to the said outer wall redescend by gravity into the container.

5. Process according to claim 4, **characterised by** the fact that the suction orifice(s) (12) is/are produced by arranging them laterally on the pipette (6), and that it is provided that the guide (7) comprises a blowing chamber (10) of the gas stream to expel the wafer particles lodged in the orifice(s) (12).

6. Process according to one of claims 1 to 5, **characterised by** the fact that the container is a substantially conical cornet.

7. Process according to one of claims 1 to 6, **characterised by** the fact that the coating agent is chocolate.

8. Process according to one of claims 1 to 7, **characterised by** the fact that the food product is an ice cream.

9. Installation for performing the process according to one of claims 1 to 8 comprising firstly a conveyor (1) with discontinuous movement by successive steps, the said conveyor (1) comprising elements on each of which is provided at least one receptacle (2) intended to receive a container composed of a wafer (22), the wall of the said container extending between an open mouth zone outwards and a narrower zone forming a closed end outwards, the said container being arranged in a receptacle such that its closed end forms the low point of the wafer, secondly a spray device (3) on which, to the right of each container supplied by a conveyor element (1) which comes opposite the spray device (3) at a stop time of the said conveyer, is arranged a spray head (4) capable of providing suction of the inner wall of the wafer (22), the said spray head (4) being able to be moved between a low position where, in order to distribute the coating agent, the head (4) is positioned in or in the vicinity of the mouth of the container, and a high position, which allows movement of the conveyor (1), **characterised by** the fact that it comprises thirdly a suction device (5) on which, to the right of each container delivered by a conveyor element (1), which comes opposite the suction device (5) at a stop time of the conveyor (1), is arranged a suction pipette (6) comprising, at its low end (6a), at least one suction orifice (12), the suction pipette (6) being able to be moved between a low position where its low end (6a) comes in the vicinity of the low point of the wafer (22), and a high position, which allows movement of the conveyor (1), the said suction device (5) being downstream of the spray device (3) in the direction of the movement of the conveyor (1), the high position of each pipette (6) of the suction device (5) taking the suction orifice(s) (12) into a chamber (10) where a gas stream blows the orifice(s) (12) .

10. Installation according to claim 9, **characterised by** the fact that the suction orifice(s) (12) are arranged laterally in the vicinity of the base of the suction pipettes (6) and that the gas stream blown at the level of the chambers (10) expels the wafer particles lodged in the orifices (12).

11. Installation according to one of claims 9 to 10, **characterised by** the fact that the movement of each suction pipette (6) between its low position and its high position is performed through a guide (7) which scrapes the outer wall of the pipette (6) which is connected to it, to make the wafer particles attached to the said outer wall redescend by gravity into the container.

12. Installation according to one of claims 9 to 11, **characterised by** the fact that each pipette (6) comprises an inner channel through which the excess coating agent is transported to a tank (14) at reduced pressure, the gas stream that blows the orifice(s) (12) coming from an air inlet (11) provided in each chamber (10), this blowing air being passed to the tank (14) together with the coating agent removed by suction.

13. Installation according to claim 12, **characterised by** the fact that the tank (14) is fitted with an air pressure regulation which controls it.

14. Installation according to one of claims 12 or 13, **characterised by** the fact that the tank (14) feeds a pump (17) which supplies the coating agent to the spray device (3) at a pressure higher than atmospheric pressure.

15. Installation according to one of claims 11 to 14, **characterised by** the fact that it employs a coating agent which is fluid when hot and solidifies by simple cooling at ambient temperature, and that between on the one hand the pump (17) that supplies the coating agent to the spray device (3) and on the other the spray device (3) itself is interposed a heat exchanger (18) which ensures that the coating agent is kept at a temperature sufficient so that the fluidity of the said agent allows correct operation of the spray (3) and suction (5) devices and a circulation without blocking of the coating agent upstream and downstream of the tank (14).

16. Installation according to claim 15, **characterised by** the fact that on the pipes (13, 20, 21) circulating the coating agent is interposed at least one filter (19).

17. Installation according to claim 16, **characterised by** the fact that it comprises a filter (19) arranged on the circulation pipes that link the heat exchanger (18) and the spray device (3).

18. Installation according to one of claims 9 to 17, **characterised by** the fact that the container is a substantially conical cornet.

19. Installation according to one of claims 9 to 18, **characterised by** the fact that the coating agent is chocolate.

20. Installation according to one of claims 9 to 19, **characterised by** the fact that the product packaged in the container is an ice cream.

## Patentansprüche

1. Verfahren zur Präparierung eines Behälters, der von einer Waffel (22) gebildet wird, wobei diese Präparierung vor dem Befiillen dieses Behälters mit einem Lebensmittelprodukt erfolgt, wobei sich die Wand dieses Behälters zwischen einem nach außen offenen Mündungsbereich und einem schmaleren Bereich, der ein nach außen geschlossenes Ende bildet, erstreckt, wobei bei diesem Verfahren der Behälter, um den knusprigen Zustand der Waffel zu erhalten, dergestalt angeordnet wird, dass das geschlossene, schmale Ende der Waffel den niedrigsten Punkt des Behälters bildet, und die Innenwand des Behälters mit einem flüssigen Beschichtungsmittel bespritzt wird, wobei dieses Beschichtungsmittel geeignet ist, sich rasch zu verfestigen, um eine Überzugsschicht zu bilden, die dazu bestimmt ist, nach Einbringen des Lebensmittelprodukts in den Behälter die Waffel und das Lebensmittelprodukt voneinander zu trennen, wobei diese Überzugsschicht dazu vorgesehen ist, später mit der Waffel und dem genannten Lebensmittelprodukt zusammen verzehrt zu werden, wobei bei diesem Verfahren das Innere des Behälters mit einer überreichlichen Menge an Beschichtungsmittel bespritzt wird, die genügt, um zu gewährleisten, dass an der Innenwand des Behälters, die mit dem Lebensmittelprodukt in Kontakt kommen soll, keinerlei Lücke in der Beschichtung bleibt, wobei das überschüssige flüssige Beschichtungsmittel sich schwerkraftbedingt am tiefsten Punkt des Behälters sammelt und vor dem Festwerden dieser überschüssigen Menge die überschüssige Menge aus dem Behälter entfernt wird, wobei auf diese Weise durch die später erfolgende Verfestigung der Überzugsschicht auf der Innenwand der Waffel eine lückenlose Sperre hergestellt werden kann,
**dadurch gekennzeichnet,**
**dass** das Beschichtungsmittel durch eine Pipette (6) angesaugt wird, deren eines Ende (6a) ausreichend kleine Abmessungen aufweist, um in die Nähe des tiefsten Punkts des Behälters gebracht zu werden, wobei dieses Ende mindestens eine Ansaugöffnung (12) aufweist, und dass den Öffnung(en) (12) nach einem Ansaugen ein Gasstrom zugeführt wird, um eventuell sich dort noch befindende, verstopfende Partikel fortzublasen.

2. Verfahren nach Anspruch 1,
**dadurch gekennzeichnet,**
**dass** die angesaugte überschüssige Menge Beschichtungsmittel zur Zufuhr für das Bespritzen des Behälterinneren zurückgeführt wird.

3. Verfahren nach Anspruch 2,
**dadurch gekennzeichnet,**
**dass** das Durchblasen der Ansaugöffnung(en) (12) mit einem Gasstrom erfolgt, der die Partikel in der gleichen Richtung ausstößt, in der der zurückgeführte Beschichtungsmittel-Strom fließt.

4. Verfahren nach Anspruch 3,
**dadurch gekennzeichnet,**
**dass** die Ansaugöffnung(en) (12) in der Nähe der Basis einer Pipette (6) angeordnet wird/werden, die in einer Führung (7) gleitet, welche geeignet ist, über die Außenwand dieser Pipette (6) zu schaben, um dafür zu sorgen, dass Waffelpartikel, die an dieser Außenwand kleben, durch Schwerkraft in den Behälter zurückkehren.

5. Verfahren nach Anspruch 4,
**dadurch gekennzeichnet,**
**dass** die Ansaugöffnung(en) (12) ausgeführt wird/werden, indem sie seitlich an der Pipette (6) angeordnet wird (werden), und dass vorgesehen ist, dass die Führung (7) eine Blaskammer (10) für den Gasstrom aufweist, um die in der (den) Öffnung(en) (12) festhängenden Waffelpartikel fortzublasen.

6. Verfahren nach einem der Ansprüche 1 bis 5,
**dadurch gekennzeichnet,**
**dass** es sich bei dem Behälter um eine im Wesentlichen konische Tüte handelt.

7. Verfahren nach einem der Ansprüche 1 bis 6,
**dadurch gekennzeichnet,**
**dass** es sich bei dem Beschichtungsmittel um Schokolade handelt.

8. Verfahren nach einem der Ansprüche 1 bis 7,
**dadurch gekennzeichnet,**
**dass** es sich bei dem Lebensmittelprodukt um Eiscreme handelt.

9. Produktionsanlage zur Ausführung des Verfahren nach einem der Ansprüche 1 bis 8, die erstens einen Förderer (1) umfasst, der schrittweise unterbrochene Vorschubbewegungen vollführt, wobei dieser Förderer (1) Elemente aufweist, auf denen jeweils mindestens eine Halterung (2) vorgesehen ist, die dazu bestimmt ist, einen von einer Waffel (22) gebildeten Behälter aufzunehmen, wobei sich die Wand dieses Behälters zwischen einem nach außen offenen Mündungsbereich und einem schmaleren Bereich, der ein nach außen geschlossenes Ende bildet, erstreckt, wobei dieser Behälter dergestalt in einer Halterung angeordnet ist, dass sein geschlossenes, schmales Ende den niedrigsten Punkt der Waffel bildet, die zweitens eine Sprühstation (3) umfasst, an der vor jedem von einem Fördererelement (1) gehaltenen Behälter, der bei einer Haltephase dieses Förderers der Sprühstation (3) gegenüber zum Stehen kommt, ein Sprühkopf (4) angeordnet ist, der geeignet ist, ein Besprühen der Innenwand der Waffel (22) zu gewährleisten, wobei sich dieser Sprühkopf (4) zwischen einer unteren Stellung , in der der Kopf (4) zur Verteilung des Beschichtungsmittels in oder im Bereich der Mündung des Behälters positioniert ist, und einer oberen Stellung, die die Vorwärtsbewegung des Förderers (1) ermöglicht, hin- und herbewegen kann,
**dadurch gekennzeichnet,**
**dass** sie drittens eine Ansaugstation (5) umfasst, an der vor jedem von einem Fördererelement (1) gehaltenen Behälter, der bei einer Haltephase des Förderers (1) der Ansaugstation (5) gegenüber zum Stehen kommt, eine Ansaugpipette (6) angeordnet ist, die an ihrem unteren Ende (6a) mindestens eine Ansaugöffnung (12) aufweist, wobei sich die Ansaugpipette (6) zwischen einer unteren Stellung, in der ihr unteres Ende (6a) in den Bereich der unteren Spitze der Waffel (22) kommt, und einer oberen Stellung, die die Vorwärtsbewegung des Förderers (1) ermöglicht, hin- und herbewegen kann, wobei sich diese Ansaugstation (5) in der Vorschubrichtung des Förderers (1) hinter der Sprühstation (3) befindet, wobei in der oberen Stellung jeder Pipette (6) der Ansaugstation (5) die Ansaugöffnung(en) (12) in eine Kammer (10) geführt werden, in der ein Gasstrom durch die Öffnung(en) (12) bläst.

10. Produktionsanlage nach Anspruch 9,
**dadurch gekennzeichnet,**
**dass** die Ansaugöffnung(en) (12) seitlich im Bereich der Basis der Ansaugpipetten (6) ausgeführt sind, und dass der Gasstrom, der im Bereich der Kammern (10) geblasen wird, die in der (den) Öffnung(en) (12) festhängenden Waffelpartikel fortbläst.

11. Produktionsanlage nach einem der Ansprüche 9 bis 10,
**dadurch gekennzeichnet,**
**dass** die Verschiebung jeder Ansaugpipette (6) zwischen ihrer unteren Stellung und ihrer oberen Stellung durch eine Führung (7) erfolgt, die über die Außenwand der ihr zugeordneten Pipette (6) schabt, um dafür zu sorgen, dass die Waffelpartikel, die an dieser Außenwand kleben, durch Schwerkraft in den Behälter zurückkehren.

12. Produktionsanlage nach einem der Ansprüche 9 bis 11,
**dadurch gekennzeichnet,**
**dass** jede Pipette (6) einen Innenkanal aufweist, durch den die überschüssige Menge Beschichtungsmittel zu einem unter niedrigerem Druck stehenden Tank (14) transportiert wird, wobei der Gasstrom, der durch die Öffnung(en) (12) bläst, von einem Lufteinlass (11) kommt, der in jeder Kammer (10) vorgesehen ist, wobei diese Blasluft ebenso wie das angesaugte Beschichtungsmittel zu dem Tank (14) hin geführt wird.

13. Produktionsanlage nach Anspruch 12,
**dadurch gekennzeichnet,**
**dass** der Tank (14) mit einer Regulierung für den darin herrschenden Luftdruck ausgerüstet ist.

14. Produktionsanlage nach einem der Ansprüche 12 oder 13,
**dadurch gekennzeichnet,**
**dass** der Tank (14) eine Pumpe (17) speist, die das Beschichtungsmittel mit einem höheren Druck als dem Luftdruck zu der Sprühstation (3) fördert.

15. Produktionsanlage nach einem der Ansprüche 11 bis 14,
**dadurch gekennzeichnet,**
**dass** mit ihr ein Beschichtungsmittel verwendet wird, das warm flüssig ist und sich durch einfaches Abkühlen auf die Umgebungstemperatur verfestigt, und dass zwischen der Pumpe (17), die das Beschichtungsmittel zur Sprühstation (3) fördert, einerseits und der Sprühstation (3) selbst andererseits ein Wärmetauscher (18) angeordnet ist, der gewährleistet, dass das Beschichtungsmittel auf einer ausreichend hohen Temperatur gehalten wird, damit der Flüssigkeitszustand dieses Beschichtungsmittels ein einwandfreies Arbeiten der Sprühstation (3) und der Ansaugstation (5) sowie eine verstopfungsfreie Zirkulation des Beschichtungsmittels vor und hinter dem Tank (14) ermöglicht.

16. Produktionsanlage nach Anspruch 15,
**dadurch gekennzeichnet,**
**dass** an den Zirkulationsleitungen (13, 20, 21) des Beschichtungsmittels mindestens ein Filter (19) zwischengeschaltet ist.

17. Produktionsanlage nach Anspruch 16,
**dadurch gekennzeichnet,**
**dass** sie einen Filter (19) aufweist, der an der Zirkulationsleitung angeordnet ist, die den Wärmetauscher (18) und die Sprühstation (3) miteinander verbindet.

18. Produktionsanlage nach einem der Ansprüche 9 bis 17,
**dadurch gekennzeichnet,**
**dass** es sich bei dem Behälter um eine im Wesentlichen konische Tüte handelt.

19. Produktionsanlage nach einem der Ansprüche 9 bis 18,
**dadurch gekennzeichnet,**
**dass** es sich bei dem Beschichtungsmittel um Schokolade handelt.

20. Produktionsanlage nach einem der Ansprüche 9 bis 19,
**dadurch gekennzeichnet,**
**dass** es sich bei dem in den Behälter eingefüllten Produkt um Eiscreme handelt.
